# EUROPEAN PATENT APPLICATION

(11) **EP 3 266 514 A1**
(43) Date of publication of application: **10.01.2018**
(21) Application number: 16764725.4
(22) Date of filing: 03.03.2016
(51) Int. Cl.: B01D 53/92, B01D 53/18, B63H 21/32, F02M 26/22, F02M 26/35, F23J 15/04, B01D 53/34, B01D 47/10, B01D 53/79, F01N 3/04, F01N 3/08

(54) **SCRUBBER, EXHAUST GAS TREATMENT DEVICE, AND SHIP**

(30) Priority: 13.03.2015 JP 2015051448
(71) Applicant: Mitsubishi Heavy Industries, Ltd., Tokyo 108-8215 (JP); Japan Engine Corporation, 1, Minamifutami, Futami-cho, Akashi-shi Hyogo 6740093 (JP)
(72) Inventor: ITO, Kazuhisa, Nagasaki-shi Nagasaki 850-8610 (JP); HIRAOKA, Naohiro, Nagasaki-shi Nagasaki 850-8610 (JP); NAKAGAWA, Takahiro, Nagasaki-shi Nagasaki 850-8610 (JP); UEDA, Takashi, Nagasaki-shi Nagasaki 850-8610 (JP)
(74) Representative: Hoffmann Eitle
(86) International application number: PCT/JP2016/056652
(87) International publication number: WO 2016/147895

(57) **Abstract**

In a scrubber, an exhaust gas treatment apparatus, and a marine vessel; by provision of: a scrubber main body (33) that is hollow shaped; a venturi unit (34), into which exhaust gas is introduced; a first water jetting unit (36) that removes, by jetting water to the exhaust gas introduced into the venturi unit (34), a harmful substance contained therein; and a second water jetting unit (38) that removes, by jetting water to a wall surface of the venturi unit (34), a harmful substance that has adhered thereto; adhesion of the harmful substance to the venturi unit is prevented.

## Description

### Field

The present invention relates to: a scrubber that removes harmful substances by jetting water to exhaust gas; an exhaust gas treatment apparatus, in which this scrubber is provided, and which treats exhaust gas emitted from a marine diesel engine; and a marine vessel that includes the exhaust gas treatment apparatus.

### Background

Exhaust gas emitted from diesel engines includes harmful substances, such as NOx, SOx, and dust. Particularly, the amount of harmful substances contained in exhaust gas from marine diesel engines, for which low quality fuel is used, is large. Therefore, marine diesel engines require: a technique for treating these harmful substances; or exhaust gas treatment apparatuses, to deal with various exhaust gas regulations that have become stricter in recent years.

Exhaust gas recirculation (EGR) is a method of reducing NOx in exhaust gas. In this EGR, a part of exhaust gas emitted from a combustion chamber of a diesel engine is made into combustion gas by being mixed into combustion air and is returned to the combustion chamber. Therefore, oxygen concentration in the combustion gas is reduced, combustion temperature is reduced by speed of combustion being delayed, the combustion being a reaction between fuel and oxygen, and the amount of NOx generated is able to be reduced.

Since exhaust gas emitted from a diesel engine contains, as described already, SOx and dust, which are also harmful to the engine, the exhaust gas is returned to the diesel engine after being mixed into combustion air taken in from the atmosphere after the exhaust gas passes through an EGR valve and harmful substances, such as SOx and dust, are removed therefrom by a scrubber. Upon the removal, the scrubber removes the harmful substances by jetting water to the exhaust gas. This scrubber is effective as an apparatus that removes SOx and dust in, not only recirculating gas, but also in the exhaust gas emitted from a funnel.

Exhaust gas recirculation systems include, for example, a system described in Patent Literature 1 cited below.

### Citation List

### Patent Literature

Patent Literature 1: Japanese Unexamined Patent Application Publication No. 2012-127205 A

### Summary

### Technical Problem

In the above described conventional exhaust gas treatment apparatus, the scrubber provided on the recirculation line for the exhaust gas removes the harmful substances by jetting water to the exhaust gas. Upon the removal, in the scrubber, particulate matter (PM), such as SOx and dust, adheres to wall surfaces of the venturi unit and the periphery thereof.

The present invention solves the above described problem, and aims to provide a scrubber, an exhaust gas treatment apparatus, and a marine vessel, in which adhesion of harmful substances to venturi units thereof is reduced. Solution to Problem

To achieve the above described object, a scrubber according to the present invention includes a venturi unit, into which exhaust gas is introduced, a first water jetting unit that removes, by jetting water to the exhaust gas that has been introduced into the venturi unit, a harmful substance contained therein, and a second water jetting unit that removes, by jetting water to a wall surface of the venturi unit, the harmful substance that has adhered thereto.

Therefore, the first water jetting unit is able to remove the harmful substance in the exhaust gas by jetting water to the exhaust gas introduced into the venturi unit, and the second water jetting unit is able to remove the harmful substance that has been removed from the exhaust gas and that has adhered to the wall surface of the venturi unit by jetting water to the wall surface of the venturi unit.

An exhaust gas treatment apparatus according to the present invention includes an exhaust gas recirculation line, through which a part of exhaust gas emitted from an engine is recirculated to the engine as a part of combustion gas, and the scrubber according to claim 1 and provided on the exhaust gas recirculation line.

Therefore, when the part of the exhaust gas emitted from the engine passes through the exhaust gas recirculation line, the first water jetting unit is able to remove the harmful substance in the exhaust gas by jetting water to the exhaust gas introduced into the venturi unit, and the second water jetting unit is able to remove the harmful substance that has been removed from the exhaust gas and that has adhered to the wall surface of the venturi unit by jetting water to the wall surface of the venturi unit.

In the exhaust gas treatment apparatus according to the present invention, a fresh water supplying device that supplies fresh water to the scrubber, and a first washing water line, through which the fresh water from the fresh water supplying device is supplied to the second water jetting unit, are provided.

Therefore, the second water jetting unit jets out a part of the fresh water supplied to the scrubber, and is thus able to remove the harmful substance by adequately jetting water to the wall surface of the venturi unit.

In the exhaust gas treatment apparatus according to the present invention, a cooler that is provided on the exhaust gas recirculation line and cools down combustion gas resulting from mixture of air and recirculating gas, a condensed water supplying device that supplies, to the scrubber, condensed water generated by the cooler cooling down the combustion gas, and a second washing water line, through which the condensed water from the condensed water supplying device is supplied to the second water jetting unit, are provided.

Therefore, the second water jetting unit jets out a part of the condensed water generated by the cooler cooling down the combustion gas, and is thus able to achieve decrease in cost and to adequately remove the harmful substance that has adhered to the wall surface of the venturi unit, without use of fresh water.

In the exhaust gas treatment apparatus according to the present invention, a water supply tank that stores therein a fresh water, and stores condensed water generated by a cooler cooling down the combustion gas is provided, the cooler being provided on the exhaust gas recirculation line, and a third washing water line, through which water in the water supply tank is supplied to the second water jetting unit, is provided.

Therefore, the water supply tank stores therein the fresh water and the condensed water generated by the cooler cooling down the combustion gas, and the second water jetting unit jets out this stored water. As a result, the required amount of fresh water or the like to be supplied as water to be jetted to the exhaust gas is reduced, and by effective utilization of treated water, increase in size of the apparatus and increase in cost are able to be prevented.

In the exhaust gas treatment apparatus according to the present invention, a water supply line, through which the water in the water supply tank is supplied to a water storage unit of the scrubber, is provided, and the washing water line supplies the water in the water supply line to the second water jetting unit.

Therefore, the water supply tank stores therein the fresh water and the condensed water generated by the cooler cooling down the combustion gas, and this stored water is supplied to the water storage unit of the scrubber and is also supplied to the second water jetting unit. As a result, by effective utilization of the treated water, increase in size of the apparatus and increase in cost are able to be prevented.

In the exhaust gas treatment apparatus according to the present invention, a circulating water line, through which water stored in the water supply tank is circulated, is provided, and the water supply line supplies the water in the circulating water line to the water storage unit of the scrubber.

Therefore, when the amount of water stored in the water storage unit is sufficient, the water in the water storage unit circulates through the circulating water line without being supplied to the scrubber, and when the amount of water stored in the water storage unit is decreased, the water in the water storage unit is supplied to the scrubber. As a result, when the amount of water stored in the water storage unit is decreased, water circulating through the circulating water line is able to be supplied immediately to the scrubber, and the amount of water stored in the water storage unit is able to be restored early.

In the exhaust gas treatment apparatus according to the present invention, a narrowed portion is provided on the circulating water line downstream from a portion where the circulating water line is connected to the water supply line, and the washing water line is connected to the circulating water line upstream of the portion where the circulating water line is connected to the water supply line.

Therefore, when the amount of water stored in the water storage unit is sufficient, water in the water supply tank circulates through the circulating water line without being supplied to the scrubber, a part thereof is supplied to the exhaust gas introducing portion of the scrubber through the washing water line, and thereby the exhaust gas introducing portion is able to be washed. As this happens, since the narrowed portion is provided on the circulating water line, this narrowed portion serves as resistance and an adequate amount of water is able to be made to flow to the washing water line. When the amount of water stored in the water storage unit becomes less than the lower limit, water in the water supply tank is supplied to the water storage unit through the water supply line, and by the pressure loss in the water supply line being set to be the same as the resistance in the narrowed portion, an adequate amount of water is able to be made to flow to the washing water channel upon this supply.

In the exhaust gas treatment apparatus according to the present invention, a water supply valve provided on the water supply line, a measurement sensor that measures amount of water stored in the water storage unit, and a control device that opens the water supply valve when the amount of water stored in the water storage unit measured by the measurement sensor becomes less than a preset lower limit, are provided.

Therefore, by the measurement sensor measuring the amount of water stored in the water storage unit, and the water supply valve being opened when the amount of water stored in the water storage unit becomes less than the lower limit, the amount of water stored in the water storage unit in the scrubber is able to be maintained adequately at all times.

In the exhaust gas treatment apparatus according to the present invention, an EGR valve is provided on the exhaust gas recirculation line, and when the EGR valve is opened, water is supplied to the second water jetting unit.

Therefore, by water being supplied to the second water jetting unit when required, the harmful substance that has been removed from the exhaust gas and has adhered to the wall surface of the venturi unit is able to be removed adequately.

Further, a marine vessel according to the present invention includes the exhaust gas treatment apparatus.

Therefore, in the scrubber, the first water jetting unit is able to remove the harmful substance in the exhaust gas by jetting water to the exhaust gas introduced into the venturi unit, and the second water jetting unit is able to remove the harmful substance that has been removed from the exhaust gas and has adhered to the wall surface of the venturi unit by jetting water to the wall surface of the venturi unit.

### Advantageous Effects of Invention

A scrubber, an exhaust gas treatment apparatus, and a marine vessel, according to the present invention, enable removal of harmful substances that have been removed from exhaust gas and that have adhered to wall surfaces of venturi units thereof.

### Brief Description of Drawings

FIG. 1 is a diagram of a schematic configuration illustrating an exhaust gas treatment apparatus of a first embodiment.
FIG. 2 is a diagram of a schematic configuration illustrating an exhaust gas treatment apparatus of a second embodiment.
FIG. 3 is a flow chart illustrating a flow of a process by the exhaust gas treatment apparatus.
FIG. 4 is a schematic diagram for explanation of water supply control for a water storage unit.
FIG. 5 is a diagram of a schematic configuration illustrating an exhaust gas treatment apparatus of a third embodiment.
FIG. 6 is a flow chart illustrating a flow of a process of water supply control in a water storage unit.
FIG. 7 is a flow chart illustrating a flow of a process of water supply control in a makeup water tank.
FIG. 8 is a schematic diagram for explanation of water supply control for the water storage unit.
FIG. 9 is a schematic diagram for explanation of water supply control for the makeup water tank.

### Description of Embodiments

Hereinafter, preferred embodiments of a scrubber, an exhaust gas treatment apparatus, and a marine vessel, according to the present invention, will be described in detail, by reference to the appended drawings. The present invention is not limited by these embodiments, and when there are plural embodiments, the present invention includes those formed by combination of the respective embodiments.

### [First Embodiment]

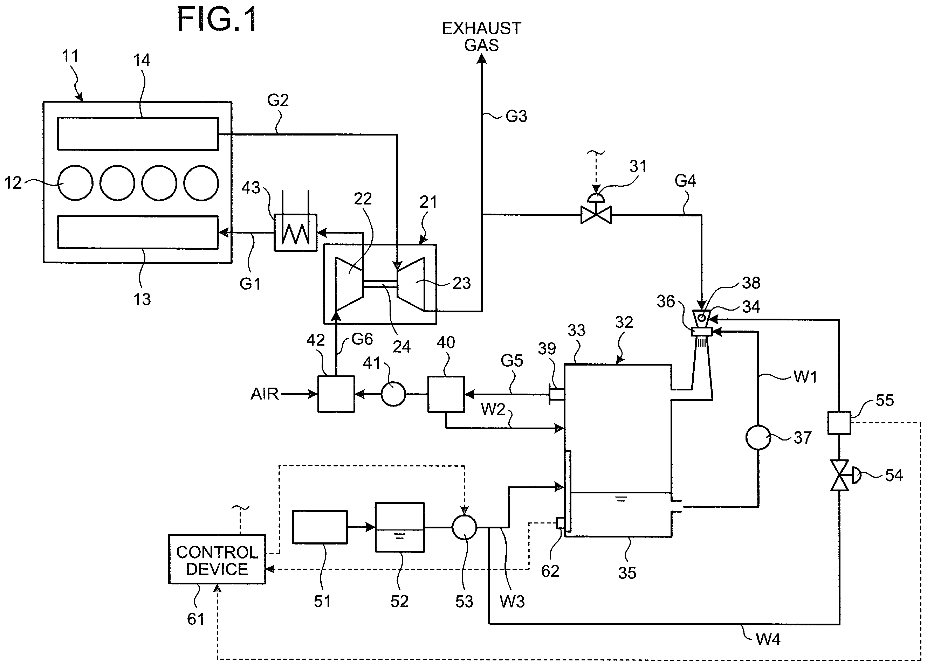

FIG. 1 is a diagram of a schematic configuration illustrating an exhaust gas treatment apparatus of a first embodiment.

By jetting water to exhaust gas emitted from a marine diesel engine, a scrubber of the first embodiment removes harmful substances contained in the exhaust gas. Further, in the exhaust gas treatment apparatus of the first embodiment, this scrubber is provided; and when a part of the exhaust gas emitted from the marine diesel engine is mixed with air and is thereafter compressed by a supercharger and recirculated as combustion gas to the marine diesel engine, the harmful substances are removed from this recirculated exhaust gas.

In the exhaust gas treatment apparatus of the first embodiment, as illustrated in FIG. 1, a marine diesel engine 11 is, although illustration thereof is omitted, a propulsion engine (main engine) that drives and rotates a propulsion propeller via a propeller shaft. This marine diesel engine 11 is a uniflow scavenging and exhausting type diesel engine, and is a two-stroke diesel engine, in which a flow of intake and emission in a cylinder is unidirectional from a lower portion to an upper portion thereof, and there is no residue of exhaust therein. Provided in the marine diesel engine 11 are: a cylinder (combustion chamber) 12, in which a piston moves up and down; a scavenging chamber 13 that communicates into the cylinder 12; and an exhaust port 14 that communicates into the cylinder 12 and has an exhaust valve provided therein. In the marine diesel engine 11, an air supply line G1 is connected to the scavenging chamber 13, and an exhaust line G2 is connected to the exhaust port 14.

In a supercharger 21, a compressor 22 and a turbine 23 are configured to be connected to each other by a rotating shaft 24 to rotate integrally with each other. In this supercharger 21, the turbine 23 is rotated by the exhaust gas discharged from the exhaust line G2 of the marine diesel engine 11, the rotation of the turbine 23 is transmitted by the rotating shaft 24 and the compressor 22 is rotated, and this compressor 22 compresses air and/or recirculating gas and supplies the compressed air and/or recirculating gas from the air supply line G1 to the marine diesel engine 11.

An exhaust line G3, through which the exhaust gas that has rotated the turbine 23 is discharged, is connected to the supercharger 21, and this exhaust line G3 is connected to a funnel not illustrated. Further, an exhaust gas recirculation line G4 is provided to branch from a middle portion of the exhaust line G3. The exhaust gas recirculation line G4 has an EGR valve (flow control valve) 31 provided thereon, and is connected to a scrubber 32. The EGR valve 31 adjusts flow rate of exhaust gas passing through the exhaust gas recirculation line G4 and adjusts the amount of exhaust gas diverted from the exhaust line G3 to the exhaust gas recirculation line G4. By jetting water to the exhaust gas, the scrubber 32 removes harmful substances, such as SOx and dust, contained therein. Although a venturi type scrubber is adopted in this embodiment, the embodiment is not limited to this configuration.

The scrubber 32 includes: a main body 33 that is hollow shaped; a venturi unit 34, into which exhaust gas is introduced; and a water storage unit 35 that stores therein waste water. In the scrubber 32: a first water jetting unit 36 that jets water to the exhaust gas introduced into the venturi unit 34 is provided; a waste water circulation line W1, through which the waste water in the water storage unit 35 is circulated to the first water jetting unit 36, is provided; and a pump 37 is provided on the waste water circulation line W1. Further, in the scrubber 32, a second water jetting unit 38 that jets water to a wall portion of the venturi unit 34 is provided. In the scrubber 32, a gas exhaust portion 39, through which exhaust gas, from which harmful substances have been removed, is discharged, is provided, and the scrubber 32 is connected to a gas exhaust line G5. On the gas exhaust line G5, a mist separator (mist eliminator) 40 and a blower (fan) 41 are provided, and the gas exhaust line G5 is connected to a mixing machine (mixer) 42.

The blower 41 discharges the exhaust gas in the scrubber 32 to the gas exhaust line G5 from the gas exhaust portion 39. The mist separator 40 separates small diameter droplet particles contained in the exhaust gas, from which the harmful substances have been removed by water jetting, and separated water that has been separated therefrom is returned to the water storage unit 35 of the scrubber 32 through a separated water line W2. The mixing machine (mixer) 42 generates combustion gas by mixing air taken in from outside air with exhaust gas (recirculating gas) from the gas exhaust line G5, and a combustion air supply line G6, through which this combustion gas is supplied to the compressor 22 of the supercharger 21, is provided to the mixing machine (mixer) 42. The supercharger 21 is able to supply combustion gas that has been compressed by the compressor 22 from the air supply line G1 to the marine diesel engine 11, and an air cooler (cooler) 43 is provided on the air supply line G1. This air cooler 43 cools down the combustion gas by causing heat exchange between: the combustion gas that has been compressed by the compressor 22 and has become high in temperature; and cooling water.

In a marine vessel, a water generator 51 for manufacturing fresh water is provided, and a fresh water tank 52 that stores therein the fresh water manufactured by the water generator 51 is connected thereto. The fresh water tank 52 is connected to the scrubber 32 through a fresh water supply line W3, and a fresh water pump 53 is provided on the fresh water supply line W3.

A washing water line (first washing water line) W4 has: a proximal end portion connected to the fresh water supply line W3 downstream from the fresh water pump 53; and a distal end portion connected to the second water jetting unit 38 of the venturi unit 34 in the scrubber 32. On the washing water line W4, a flow regulating valve 54 and a flowmeter 55 are provided.

A control device 61 is able to control the EGR valve 31, the fresh water pump 53, and the flow regulating valve 54. The control device 61 controls opening and closing of the EGR valve 31 according to an operation state (operation sea area) of the marine vessel. That is, if the current operation sea area of the marine vessel is not a NOx regulated sea area where the amount of NOx emission is regulated, the control device 61 closes the EGR valve 31, and if the current operation sea area is a NOx regulated sea area, the control device 61 opens the EGR valve 31.

The control device 61 controls driving of the fresh water pump 53 according to the amount of waste water in the scrubber 32. That is, since the scrubber 32 removes the harmful substances by jetting water to the exhaust gas, a part of the jetted water is turned into steam by the high temperature exhaust gas, and taken away by the exhaust gas. Further, although illustration thereof is omitted, since the scrubber 32 cleans the waste water in the water storage unit 35 with a filter, a part of the waste water is taken away with waste. Therefore, the scrubber 32 needs to be regularly supplied with water for jetting.

In the scrubber 32, a water amount sensor 62 that measures the amount of waste water stored in the water storage unit 35 is provided. When the amount of water in the water storage unit 35 measured by the water amount sensor 62 becomes less than a lower limit that has been set beforehand, the control device 61 supplies fresh water stored in the fresh water tank 52 to the water storage unit 35 of the scrubber 32 through the fresh water supply line W3 by actuating the fresh water pump 53. Thereafter, when the amount of water in the water storage unit 35 measured by the water amount sensor 62 becomes more than an upper limit, the control device 61 stops the supply of fresh water to the water storage unit 35 of the scrubber 32 through the fresh water supply line W3 by stopping the actuation of the fresh water pump 53.

Further, since a part of the exhaust gas flows from the exhaust line G3 to the exhaust gas recirculation line G4 when the EGR valve 31 is opened, the scrubber 32 is actuated, and thus the second water jetting unit 38 needs to jet water supplied from the washing water line W4 to the venturi unit 34. Therefore, when the EGR valve 31 is opened; based on a measurement result of the flowmeter 55, the control device 61 drives the fresh water pump 53 and opens the flow regulating valve 54 to a predetermined opening, to supply water from the washing water line W4 to the second water jetting unit 38.

A fresh water supplying device of the present invention is formed of the water generator 51, the fresh water tank 52, the fresh water pump 53, and the fresh water supply line W3.

Functions of the exhaust gas treatment apparatus of the first embodiment will now be described.

In the marine diesel engine 11 in the exhaust gas treatment apparatus of the first embodiment, when combustion air is supplied from the scavenging chamber 13 into the cylinder 12, this combustion air is compressed by the piston, and spontaneous ignition and combustion are caused by fuel being jetted to this high temperature air. The generated combustion gas is discharged, as exhaust gas, from the exhaust port 14 to the exhaust line G2. The exhaust gas discharged from the marine diesel engine 11 rotates the turbine 23 in the supercharger 21, is thereafter discharged to the exhaust line G3, and all of the exhaust gas is emitted outside from the exhaust line G3 when the EGR valve 31 is closed.

In contrast, when the EGR valve 31 is open, a part of the exhaust gas flows from the exhaust line G3 to the exhaust gas recirculation line G4. Harmful substances, such as NOx and dust, which are contained in the exhaust gas that has flown into the exhaust gas recirculation line G4, are removed by the scrubber 32. That is, in the scrubber 32, by water being jetted to the exhaust gas from the first water jetting unit 36 as the exhaust gas passes the venturi unit 34 at high speed, the exhaust gas is cooled down by this water and particulate matter (PM), such as SOx and dust, falls down with the water, and is removed therefrom. Further, by jetting water supplied from the washing water line W4; the second water jetting unit 38 cools down wall surfaces of the venturi unit 34 and the first water jetting unit 36 with this water, and causes the particulate matter (PM), such as SOx and dust, which has adhered to the venturi unit 34, to fall down with the water and be removed therefrom. Furthermore, generation of deposits caused by circulating water is also able to be prevented. Water containing SOx, dust, and the like is stored in the water storage unit 35, and returned again to the first water jetting unit 36 through the waste water circulation line W1 by the pump 37.

This water jetting by the first water jetting unit 36 is started when EGR operation is started (when the EGR valve 31 is opened), and the water jetting is ended when the EGR operation is stopped (when the EGR valve 31 is closed). The second water jetting unit 38 desirably starts the water jetting after the EGR operation is started and the temperature inside the venturi unit 34 exceeds a predetermined temperature (for example, 80°C), and desirably stops the water jetting when the temperature inside the venturi unit 34 decreases to be lower than the predetermined temperature. Accordingly, the second water jetting unit 38 starts the water jetting when a predetermined time period elapses from the start of the EGR operation, and ends the water jetting when a predetermined time period elapses from the stoppage of the EGR operation. In this case, a timer may be used, or a temperature sensor may be used.

Further, since sodium hydroxide (NaOH) has been added to circulating water circulating through the waste water circulation line W1, if the circulating water is dried up in the adhered state, a salt thereof is deposited. Therefore, by washing away the circulating water that has been attached to the wall surfaces of the venturi unit 34 and the first water jetting unit 36 with water, deposit of the salt is able to be prevented.

The exhaust gas, from which the harmful substances have been removed by the scrubber 32, is discharged from the gas exhaust portion 39 to the gas exhaust line G5, small diameter droplet particles therein are removed by the mist separator 40, and thereafter, the exhaust gas is turned into combustion gas by being mixed with intaken air by the mixing machine 42. After passing through the combustion air supply line G6 and being compressed by the compressor 22 of the supercharger 21, this combustion gas is cooled down by the air cooler 43 and supplied to the diesel engine 11 from the air supply line G1.

As described above, provided in the scrubber of the first embodiment are: the scrubber main body 33 that is hollow shaped; the venturi unit 34, into which exhaust gas is introduced; the first water jetting unit 36 that removes, by jetting water to the exhaust gas introduced into the venturi unit 34, harmful substances contained therein; and the second water jetting unit 38 that removes, by jetting water to the wall surface of the venturi unit 34, the harmful substances adhered thereto.

Therefore, the first water jetting unit 36 is able to remove harmful substances in the exhaust gas by jetting water to the exhaust gas introduced into the venturi unit 34, and the second water jetting unit 38 is able to remove the harmful substances that have been removed from the exhaust gas and that have adhered to the wall surface of the venturi unit 34 by jetting water to the wall surface of the venturi unit 34. As a result, the harmful substances are able to be removed efficiently from the exhaust gas.

As described above, the exhaust gas treatment apparatus of the first embodiment includes: the exhaust gas recirculation line G4, through which a part of exhaust gas emitted from the marine diesel engine 11 is recirculated as a part of combustion gas; and the scrubber 32 provided on the exhaust gas recirculation line G4.

Therefore, when the part of the exhaust gas emitted from the marine diesel engine 11 passes through the exhaust gas recirculation line G4, the first water jetting unit 36 is able to remove harmful substances in the exhaust gas by jetting water to the exhaust gas introduced into the venturi unit 34, and the second water jetting unit 38 is able to remove the harmful substances that have been removed from the exhaust gas and have adhered to the wall surface of the venturi unit 34 by jetting water to the wall surface of the venturi unit 34. As a result, the harmful substances are able to be efficiently removed from the exhaust gas and exhaust gas treatment performance is able to be improved.

In the exhaust gas treatment apparatus of the first embodiment, the fresh water supply line W3, through which fresh water is supplied to the scrubber 32, and the washing water line W4, through which the fresh water in the fresh water supply line W3 is supplied to the second water jetting unit 38, are provided. Therefore, the second water jetting unit 36 jets out a part of the fresh water supplied to the scrubber 32, and thus by adequately jetting water to the wall surface of the venturi unit 34, the second water jetting unit 36 is able to remove the harmful substances therefrom.

### [Second Embodiment]

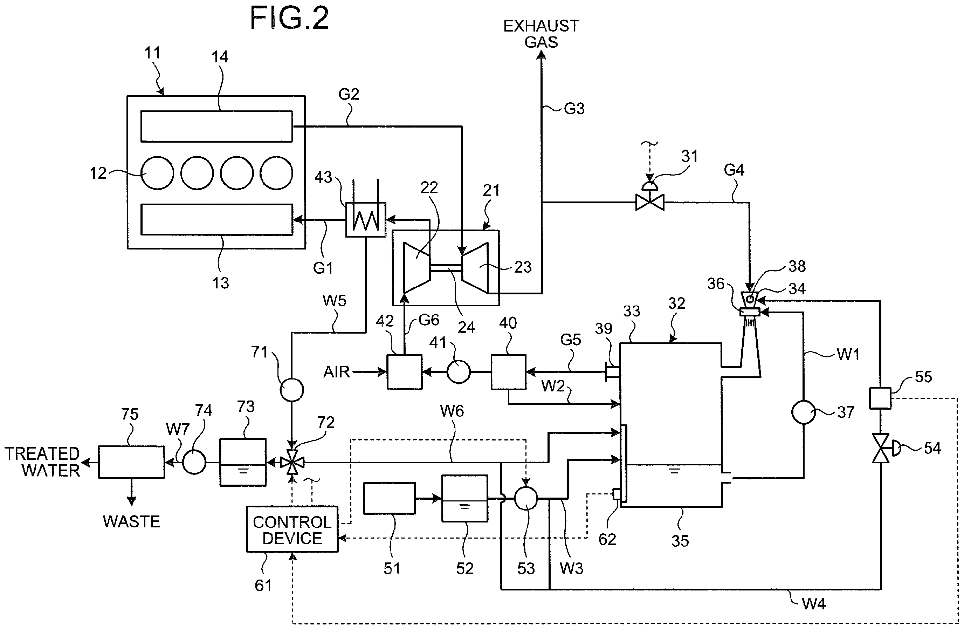

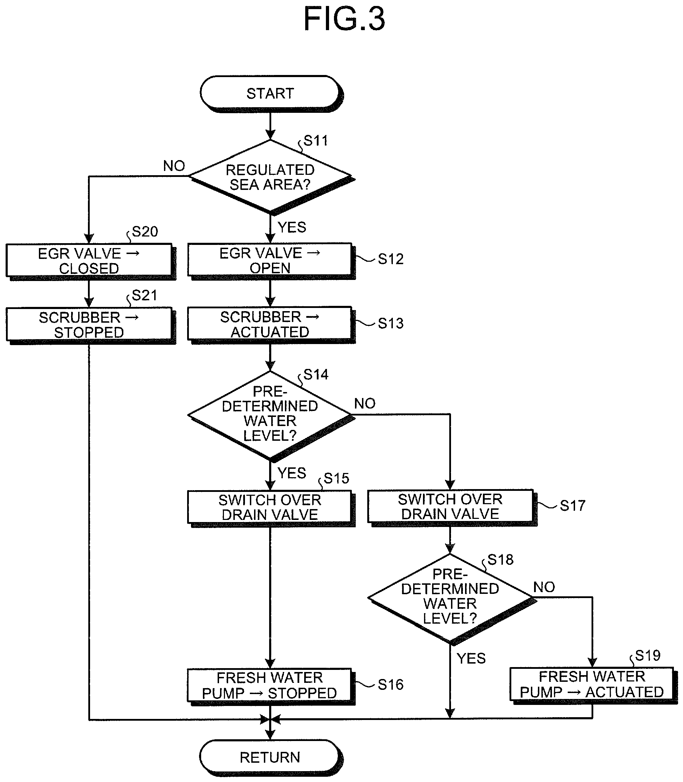

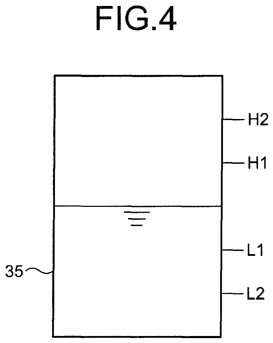

FIG. 2 is a diagram of a schematic configuration illustrating an exhaust gas treatment apparatus of a second embodiment, FIG. 3 is a flow chart illustrating a flow of a process by the exhaust gas treatment apparatus, and FIG. 4 is a schematic diagram for explanation of water supply control for a water storage unit. The same signs will be appended to members having functions that are the same as those of the above described embodiment, and detailed description thereof will be omitted.

In the supercharger 21 in the exhaust gas treatment apparatus of the second embodiment, as illustrated in FIG. 2, the compressor 22 and the turbine 23 are configured to be connected to each other by the rotating shaft 24 to rotate integrally with each other. In this supercharger 21, the compressor 22 compresses combustion gas resulting from mixture of air and exhaust gas (recirculating gas), and supplies the combustion gas from the air supply line G1 to the marine diesel engine 11. The air cooler 43 provided on the air supply line G1 cools down the combustion gas by causing heat exchange between: the combustion gas that has been compressed by the compressor 22 and has become high in temperature; and cooling water.

Since temperature and pressure in the air cooler 43 are reduced by the high temperature combustion gas being cooled down, steam contained therein is condensed, and condensed water (drain water) is thus generated. To the air cooler 43, a drain water discharge line W5, through which the generated drain water is discharged, is provided, and a drain water pump 71 is provided to the drain water discharge line W5. A drain water supply line (condensed water supply line) W6 and a drain water treatment line W7 are connected to this drain water discharge line W5 via a drain valve 72.

The drain water supply line W6 is connected to the scrubber 32. Further, the drain water treatment line W7 has a drain water tank 73 and a pump 74, provided thereon, and is connected to a treatment device 75. This treatment device 75 removes oil, such as lubricating oil or system oil in the marine diesel engine 11, from the drain water, discharges treated water as it is, and the separated waste is accommodated in a waste container not illustrated.

Further, the washing water line (a first washing water line and a second washing water line) W4 has a proximal end portion connected to the fresh water supply line W3 downstream from the fresh water pump 53, and also connected to the drain water supply line W6. The washing water line W4 has a distal end portion connected to the second water jetting unit 38 of the venturi unit 34 in the scrubber 32, and has the flow regulating valve 54 and the flowmeter 55, provided thereon. Therefore, the washing water line W4 is able to supply fresh water to the second water jetting unit 38 by using the first washing water line and is able to supply drain water to the second water jetting unit 38 by using the second washing water line.

The control device 61 is able to control the EGR valve 31, the drain valve 72, the pump 74, the fresh water pump 53, and the flow regulating valve 54. The control device 61 controls the drain valve 72 and the fresh water pump 53 according to the amount of waste water in the scrubber 32. In the scrubber 32, the water amount sensor 62 that measures the amount of waste water stored in the water storage unit 35 is provided. When the amount of water in the water storage unit 35 measured by the water amount sensor 62 becomes less than a lower limit that has been set beforehand, the control device 61 supplies drain water discharged to the drain water discharge line W5 from the air cooler 43 to the water storage unit 35 of the scrubber 32 through the drain water supply line W6 by switching over the drain valve 72. In contrast, when the amount of water in the water storage unit 35 measured by the water amount sensor 62 becomes more than an upper limit that has been set beforehand, the control device 61 supplies drain water discharged to the drain water discharge line W5 from the air cooler 43 to the drain water tank 73 (treatment device 75) through the drain water treatment line W7 by switching over the drain valve 72.

Further, if the measured amount of water in the water storage unit 35 is not increased even if the drain water is supplied to the water storage unit 35 of the scrubber 32 through the drain water supply line W6 by switching over the drain valve 72, the control device 61 supplies fresh water stored in the fresh water tank 52 to the water storage unit 35 of the scrubber 32 through the fresh water supply line W3 by actuating the fresh water pump 53. Thereafter, when the amount of water in the water storage unit 35 measured by the water amount sensor 62 becomes more than the upper limit, the control device 61 stops the supply of fresh water to the water storage unit 35 of the scrubber 32 through the fresh water supply line W3 by stopping the actuation of the fresh water pump 53. Upon the stoppage, by the drain valve 72 being switched over, the supply of drain water to the water storage unit 35 through the drain water supply line W6 is also stopped.

Further, since a part of the exhaust gas flows from the exhaust line G3 to the exhaust gas recirculation line G4 when the EGR valve 31 is opened, the scrubber 32 is actuated, and thus the second water jetting unit 38 needs to jet water supplied from the washing water line W4, to the venturi unit 34. Therefore, when the EGR valve 31 is opened; based on a measurement result of the flowmeter 55, the control device 61 drives the fresh water pump 53 and opens the flow regulating valve 54 to a predetermined opening, to supply water from the washing water line W4 to the second water jetting unit 38.

Upon this supply, if drain water discharged from the air cooler 43 to the drain water discharge line W5 is being supplied to the water storage unit 35 of the scrubber 32 through the drain water supply line W6 by switch-over of the drain valve 72, this drain water is supplied to the second water jetting unit 38 through the washing water line W4 from the drain water supply line W6 and the fresh water pump 53 is stopped. Further, when the amount of water supplied to the second water jetting unit 38 based on the measurement result of the flowmeter 55 is not sufficient, the control device 61 drives the fresh water pump 53 and increases the amount of water supplied to the second water jetting unit 38.

A condensed water supplying device of the present invention is formed of the drain water discharge line W5, the drain water pump 71, the drain valve 72, the drain water supply line W6, and the like.

Functions of the exhaust gas treatment apparatus of the second embodiment will now be described.

In the marine diesel engine 11 in the exhaust gas treatment apparatus of the second embodiment, when combustion air is supplied from the scavenging chamber 13 into the cylinder 12, this combustion air is compressed by the piston, and spontaneous ignition and combustion are caused by fuel being injected to this high temperature air. The generated combustion gas is discharged, as exhaust gas, from the exhaust port 14 to the exhaust line G2. The exhaust gas emitted from the marine diesel engine 11 rotates the turbine 23 in the supercharger 21, is thereafter discharged to the exhaust line G3, and all of the exhaust gas is emitted outside from the exhaust line G3 when the EGR valve 31 is closed.

In contrast, when the EGR valve 31 is open, a part of the exhaust gas flows from the exhaust line G3 to the exhaust gas recirculation line G4. Harmful substances, such as NOx and dust, which are contained in the exhaust gas that has flown into the exhaust gas recirculation line G4, are removed by the scrubber 32. That is, in the scrubber 32, by water being jetted to the exhaust gas from the first water jetting unit 36 as the exhaust gas passes the venturi unit 34 at high speed, the exhaust gas is cooled down by this water and particulate matter (PM), such as SOx and dust, falls down with the water, and is removed therefrom. Further, by jetting out water supplied from the washing water line W4; the second water jetting unit 38 cools down wall surfaces of the venturi unit 34 and the first water jetting unit 36 with this water, and causes the particulate matter (PM), such as SOx and dust, which has adhered to the venturi unit 34, to fall down with the water and be removed therefrom. Furthermore, generation of deposits caused by circulating water is also able to be prevented. Water containing SOx, dust, and the like is then stored in the water storage unit 35, and returned again to the first water jetting unit 36 through the waste water circulation line W1 by the pump 37.

The exhaust gas, from which the harmful substances have been removed by the scrubber 52, is discharged from the gas exhaust portion 39 to the gas exhaust line G5, small diameter droplet particles therein are separated by the mist separator 40, and thereafter, the exhaust gas is turned into combustion gas by being mixed with intaken air by the mixer 42. After passing through the combustion air supply line G6 and being compressed by the compressor 22 of the supercharger 21, this combustion gas is cooled down by the air cooler 43 and supplied to the marine diesel engine 11 from the air supply line G1.

By the air cooler 43 cooling down the high temperature combustion gas, steam is condensed, drain water is generated, and this drain water is discharged to the drain water discharge line W5. Since this drain water contains oil, normally, this drain water flows into the drain water treatment line W7 from the drain water discharge line W5, is stored in the drain water tank 73, and the treatment device 75 performs purification treatment on this drain water.

The control device 61 controls the drain valve 72 and the fresh water pump 53 according to the amount of waste water in the scrubber 32. Control of amount of water stored in the scrubber 32 by the control device 61 will now be described in detail by use of a flow chart.

As illustrated in FIG. 2 and FIG. 3, at Step S11, it is determined whether a marine vessel is travelling in a NOx regulated sea area. If it is determined that the marine vessel is travelling in a NOx regulated sea area (Yes); at Step S12, the EGR valve 31 is opened, and at Steep S13, the scrubber 32 is actuated. In contrast, if it is determined that the marine vessel is not travelling in a NOx regulated sea area (No); at Step S20, the EGR valve 31 is closed, and at Step S21, the scrubber 32 is stopped.

At Step S14, it is determined whether the amount of water in the water storage unit 35 in the scrubber 32 measured by the water amount sensor 62 is at a predetermined water level (equal to or more than a lower limit). If it is determined that the amount of water in the water storage unit 35 in the scrubber 32 is at the predetermined water level (equal to or more than the lower limit) (Yes); at Step S15, the drain water discharge line W5 and the drain water treatment line W7 are communicated into each other by the drain valve 72, and at Step S16, the fresh water pump 53 is stopped. In contrast, if it is determined that the amount of water in the water storage unit 35 in the scrubber 32 is not at the predetermined water level (less than the lower limit) (No); at Step S17, the drain water discharge line W5 and the drain water supply line W6 are communicated into each other by the drain valve 72.

The drain water discharged from the air cooler 43 to the drain water discharge line W5 by the drain water discharge line W5 and the drain water supply line W6 communicating into each other by the switch-over of the drain valve 72 is supplied to the water storage unit 35 of the scrubber 32 through the drain water supply line W6. Therefore, the amount of water in the water storage unit 35 is increased.

Further, at Step S18, it is determined whether the amount of water in the water storage unit 35 in the scrubber 32 measured by the water amount sensor 62 is at the predetermined water level (equal to or more than the lower limit). That is, when the consumption of water in the scrubber 32 is large even if the drain water from the air cooler 43 is supplied to the water storage unit 35 from the drain water supply line W6, the amount of water in the water storage unit 35 is not increased. Therefore, if it is determined that the amount of water in the water storage unit 35 in the scrubber 32 is at the predetermined water level (equal to or more than the lower limit) (Yes); the process is ended. In contrast, if it is determined that the amount of water in the water storage unit 35 in the scrubber 32 is not at the predetermined water level (less than the lower limit) (No); at Step S19, the fresh water pump 53 is actuated. Fresh water that has been stored in the fresh water tank 52 is then supplied to the water storage unit 35 of the scrubber 32 through the fresh water supply line W3 by the fresh water pump 53. Therefore, the amount of water in the water storage unit 35 is increased.

Thereafter, at Step S14, if the amount of water in the water storage unit 35 is increased and it is determined that the amount of water is at the predetermined water level (Yes); at Step S15, the drain water discharge line W5 and the drain water treatment line W7 are communicated into each other by the drain valve 72, and at Step S16, the fresh water pump 53 is stopped. Further, at Step S11, if it is determined that the marine vessel has left the NOx regulated sea area (No); at Step S20, the EGR valve 31 is closed, and at Step S21, the scrubber 32 is stopped.

Practically, an upper limit and a lower limit for the amount of water in the water storage unit 35 are set, and if the amount of water in the water storage unit 35 measured by the water amount sensor 62 becomes more than the upper limit, the control device 61 switches over the drain valve 32, and stops the actuation of the fresh water pump 53.

For example, as illustrated in FIG. 4, upper limits H1 and H2, and lower limits L1 and L2, are set for the water level in the water storage unit 35. As to the upper limits, H1 < H2; as to the lower limits, L1 < L2; and as to these water levels, H2 > H1 > L1 > L2. When the initial water level in the water storage unit 35 is between the lower limit L1 and the upper limit H1, supply of the drain water or fresh water has been stopped.

When the water level is reduced to the lower limit L1 by the takeaway by the recirculating gas, supply of drain water is started at a time point (L1 to L2), at which the water level becomes less than the lower limit L1. When the amount of drain water supplied is more than the amount of takeaway, the water level is increased, and the supply of drain water is stopped at a time point (H1 to H2), at which the water level reaches the upper limit H2. In contrast, when the amount of drain water supplied is less than the amount of takeaway, the water level is decreased, and supply of fresh water is started at a time point (L1 to L2), at which the water level reaches the lower limit L2. When the water level increases, the supply of drain water is stopped at a time point (L1 to H1), at which the water level reaches the upper limit H1. Further, in a case where the operation conditions, temperature, and humidity have changed, the amount of takeaway and the amount of drain water also change. Since it is unable to be determined that the amount of takeaway > drain water at this time point, drain water is supplied. When the amount of drain water supplied is more than the amount of takeaway and the water level increases to the upper limit H2, the supply of drain water is stopped. In contrast, when the amount of drain water supplied is less than the amount of takeaway, the water level is decreased.

According to the above described method of control by the control device 61, control of supply and stoppage of drain water and fresh water is facilitated. If only one lower limit is set, whether just the drain water is sufficient needs to be determined and the amount of takeaway and the amount of drain water need to be compared to each other, but since water taken away is in a state of steam, measurement is difficult. Further, although there is a method of measuring the water level, the water level needs to be highly accurately measured and whether there has been a decrease or an increase needs to be determined, and thus control thereof becomes complicated. In this embodiment, by the upper limits H1 and H2 and the lower limits L1 and L2 being set, ON/OFF control just needs to be performed, and thus determination and control are facilitated.

As described above, provided in the exhaust gas treatment apparatus of the second embodiment are: the exhaust gas recirculation line G4, through which combustion gas is recirculated to the marine diesel engine 11, the combustion gas being formed by a part of exhaust gas emitted from the marine diesel engine 11 being mixed with air and being compressed by the supercharger 21; the scrubber 32 that removes, by jetting water to the exhaust gas flowing through the exhaust gas recirculation line G4, harmful substances therefrom; the air cooler 43 that cools down the combustion gas compressed by the compressor 22 after the harmful substances have been removed therefrom by the scrubber 32; and the drain water supply line W6, through which drain water is supplied to the scrubber 32, the drain water having been generated by the combustion gas being cooled down by the air cooler 43.

Therefore, a part of the exhaust gas emitted from the marine diesel engine 11 passes through the exhaust gas recirculation line G4, is compressed by the supercharger 21, and is recirculated to the marine diesel engine 11 as combustion gas. By jetting water to the exhaust gas flowing through the exhaust gas recirculation line G4, the scrubber 32 removes harmful substances therefrom. Further, the air cooler 43 cools down the combustion gas compressed by the compressor 22 after the harmful substances have been removed therefrom. Since drain water is generated by the air cooler 43 cooling down the combustion gas, this drain water is supplied to the scrubber 32 through the drain water supply line W6. Therefore, in the scrubber 32, water shortage is mitigated by the supply of the drain water, and increase in size of the apparatus and increase in cost are able to be prevented by effective utilization of treated water.

Provided in the exhaust gas treatment apparatus of the second embodiment is the washing water line W4, through which the drain water in the drain water supply line W6 is supplied to the second water jetting unit 38. Therefore, the second water jetting unit 38 jets out a part of the drain water generated by the air cooler 43 cooling down the combustion gas, and thus the cost is able to be reduced by reduction in the amount of fresh water used, and harmful substances that have adhered to the wall surface of the venturi unit 34 are able to be removed adequately.

Further, by the proximal end portion of the washing water line W4 being connected to the drain water supply line W6 and the fresh water supply line W3, when the drain water is sufficient, this drain water is jetted out, and when the drain water is insufficient, fresh water is jetted out, and thus water is able to be jetted to the wall surface of the venturi unit 34 adequately.

[Third Embodiment]

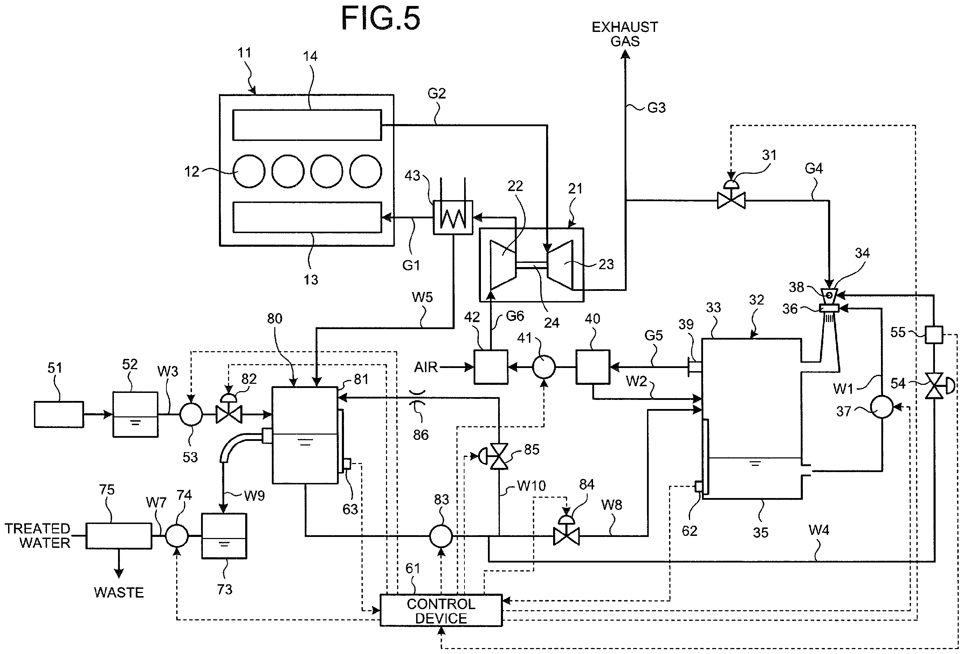

FIG. 5 is a diagram of a schematic configuration illustrating an exhaust gas treatment apparatus of a third embodiment.

In the exhaust gas treatment apparatus of the third embodiment, as illustrated in FIG. 5, the supercharger 21 is configured such that the compressor 22 and the turbine 23 are connected to each other by the rotating shaft 24 to rotate integrally with each other. In this supercharger 21, the compressor 22 compresses combustion gas resulting from mixture of air and exhaust gas (recirculating gas), and the combustion gas is supplied from the air supply line G1 to the marine diesel engine 11. The air cooler 43 provided on this air supply line G1 cools down the combustion gas by performing heat exchange between: the combustion gas that has been compressed by the compressor 22 and has become high in temperature; and cooling water.

When the air cooler 43 cools down the high temperature combustion gas, since the temperature and pressure of the combustion gas are reduced, steam contained in the combustion gas is condensed, and thereby condensed water (drain water) is generated. In the air cooler 43, the drain water discharge line W5, through which the generated drain water is discharged, is provided, and this drain water discharge line W5 is connected to a makeup water tank (water supply tank) 80.

The makeup water tank 80 includes a tank body 81, the drain water discharge line (drain water supply pipe) W5, the fresh water supply line (fresh water supply pipe) W3, a water supply line (water supply pipe) W8, and an overflow line (waste water pipe) W9.

The tank body 81 is hollow shaped, and is able to store therein a predetermined amount of water (drain water and fresh water). A piping forming the drain water discharge line W5 is connected to an upper portion of the tank body 81, and drain water generated in the air cooler 43 is supplied to the tank body 81 through this drain water discharge line W5. Further, a piping forming the fresh water supply line W3 is connected to a side portion of the tank body 81, and fresh water is supplied to the tank body 81 through this fresh water supply line W3. This fresh water supply line W3 has the water generator 51, the fresh water tank 52, the fresh water pump 53, and a fresh water valve 82, provided thereon.

A piping forming the overflow line W9 is connected to a side portion of the tank body 81, and when the amount of water stored in the tank body 81 exceeds an upper limit that has been set beforehand, the stored water is discharged therefrom through this overflow line W9. The drain water treatment line W7 has the drain water tank 73 and the pump 74, provided thereon, and is connected to the treatment device 75.

A piping forming the water supply line W8 is connected to a lower portion of the tank body 81, this water supply line W8 is connected to the scrubber 32, and water stored in the tank body 81 is supplied to the scrubber 32 through this water supply line W8. The water supply line W8 has a water supply pump 83 and a water supply valve 84, provided thereon, the water supply pump 83 is provided at the tank body 81 side on the water supply line W8, and the water supply valve 84 is provided at the scrubber 32 side, that is, downstream from the water supply pump 83.

In the tank body 81, a circulating water line W10 including the water supply line W8 is provided. This circulating water line W10 has a proximal end portion connected to a lower portion of the tank body 81, and a distal end portion connected to a side portion of the tank body 81. Therefore, a proximal end portion of the water supply line W8 is connected to this circulating water line W10, and a distal end portion of the water supply line W8 is connected to the water storage unit 35 of the scrubber 32. The water supply pump 83 is provided on the circulating water line W10 upstream of a portion, at which the circulating water line W10 is connected to the water supply line W8. The water supply valve 84 is provided on the water supply line W8 downstream from the water supply pump 83. Further, a circulation valve 85 is provided downstream from the portion, at which the circulating water line W10 is connected to the water supply line W8.

The water supply valve 84 and the circulation valve 85 are able to switch over a supply destination of water stored in the tank body 81, between the circulating water line W10 and the water supply line W8. That is, when the water supply valve 84 is closed and the circulation valve 85 is opened, the water stored in the tank body 81 is able to be made to flow to the circulating water line W10. In contrast, when the water supply valve 84 is opened and the circulation valve 85 is closed, the water stored in the tank body 81 is able to be made to flow to the water supply line W6.

The washing water line (third washing water line) W4 has: a proximal end portion connected to the circulating water line W10 upstream of the portion, at which the circulating water line W10 is connected to the water supply line W8; and a distal end portion connected to the venturi unit 34 in the scrubber 32. The washing water line W4 has the flow regulating valve 54 and the flowmeter 55, provided thereon. The venturi unit 34 has the second water jetting unit 38 provided therein, and by jetting out water supplied from the washing water line W4, the second water jetting unit 38 cools down the wall surfaces of the venturi unit 34 and the first water jetting unit 36 with this water, and causes particulate matter (PM), such as SOx and dust, which has adhered to the venturi unit 34, to fall down with the water and be removed therefrom. Furthermore, generation of deposits caused by circulating water is also able to be prevented.

Further, an orifice (narrowed portion) 86 is provided on the circulating water line W10 downstream from the circulation valve 85. This orifice 86 is a resistor in the circulating water line W10, and provides pressure loss to water flowing through the circulating water line W10. The magnitude of the pressure loss caused by the orifice 86 in the circulating water line W10 is set according to the amount of water supplied to the second water jetting unit 38 through the washing water line W4. That is, the water stored in the tank body 81 is circulated through the circulating water line W10 by the water supply pump 83. Since the washing water line W4 is connected to the circulating water line W10, if the resistance of the orifice 86 (pressure loss) is large, the amount of water flowing to the washing water line W4 is increased.

The control device 61 is able to control opening and closing of the EGR valve 31, the flow regulating valve 54, and the water supply valve 84, and is able to control driving of the pump 37, the blower 40, the fresh water pump 53, the pump 74, and the water supply pump 83. This control device 61 controls opening and closing of the EGR valve 31 according to an operation state (operation sea area) of a marine vessel. That is, if the current operation sea area of the marine vessel is outside a NOx regulated sea area where the amount of NOx emission is regulated; an EGR actuation signal is not output and the control device 61 closes the EGR valve 31. In contrast, if the current operation sea area of the marine vessel is in a NOx regulated sea area where the amount of NOx emission is regulated, an EGR actuation signal is output and the control device 61 opens the EGR valve 31. While description will be made later, a crew member may make the determination with respect to a NOx regulated sea area and operate an EGR actuation switch to output an EGR actuation signal, or the control device 61 may make the determination with respect to a NOx regulated sea area and output an EGR actuation signal.

If the current operation sea area of the marine vessel is in a NOx regulated sea area and the EGR valve 31 is opened by the EGR actuation signal, the control device 61 actuates the scrubber 32. That is, the control device 61 opens the EGR valve 31 and drives the pump 37 and the blower 41. Therefore, when exhaust gas in the exhaust line G3 flows into the exhaust gas recirculation line G4, by jetting water to the exhaust gas, the scrubber 32 is able to remove harmful substances, such as SOx and dust contained therein.

Further, when actuating the scrubber 32, the control device 61 drives the water supply pump 83, closes the water supply valve 84, and opens the circulation valve 85. Water stored in the tank body 81 is then circulated by the water supply pump 83 through the circulating water line W10. The control device 61 then controls opening and closing of the water supply valve 84 and the circulation valve 85, according to the amount of water stored in the water storage unit 35 of the scrubber 32.

In the scrubber 32, the water amount sensor (second measurement sensor) 62 that measures the amount of stored water stored in the water storage unit 35 is provided. When the amount of water stored in the water storage unit 35 measured by the water amount sensor 62 becomes less than a lower limit that has been set beforehand, the control device 61 supplies the water stored in the makeup water tank 80 through the water supply line W8 to the water storage unit 35 of the scrubber 32 by closing the circulation valve 85 and opening the water supply valve 84. A part of the stored water made to flow out to the circulating water line W10 from the tank body 81 by the water supply pump 83 is made to flow to the washing water line W4 by the orifice 86, and the rest of the stored water is returned to tank body 81 through the circulating water line W10. When the circulation valve 85 is closed and the water supply valve 84 is opened, the amount of water, which is of the stored water made to flow out from the tank body 81 to the circulating water line W10 by the water supply pump 83, and which was being returned to the tank body 81 through the circulating water line W10, is supplied from the water supply line W8 to the water storage unit 35 of the scrubber 32, and thus the amount of water supplied from the washing water line W4 to the second water jetting unit 38 is hardly changed. That is, since the pressure loss in the circulating water line W10 is equal to the pressure loss in the water supply line W8, whether the communication is to the circulating water line W10 or to the water supply line W8, the amount of water supplied to the second water jetting unit 38 from the washing water line W4 is able to be maintained.

If the amount of water stored in the water storage unit 35 measured by the water amount sensor 62 becomes more than a reference value (upper limit) that has been set beforehand, the control device 61 stops the supply of water to the water storage unit 35 through the water supply line W8 from the makeup water tank 80, by opening the circulation valve 85 and closing the water supply valve 84.

Further, the control device 61 controls driving of the fresh water pump 53 and controls opening and closing of the fresh water valve 82, according to the amount of water stored in the tank body 81 of the makeup water tank 80. That is, the air cooler 43 generates drain water by cooling down combustion gas, and supplies this drain water to the makeup water tank 80 from the drain water discharge line W5. However, since the amount of exhaust gas fluctuates according to the operation state (for example, output) of the marine diesel engine 11, the amount of drain water generated also fluctuates. Further, as described above, when the amount of water stored in the water storage unit 35 of the scrubber 32 is decreased, water stored in the makeup water tank 80 is supplied to the water storage unit 35 from the water supply line W8, and thus the amount of water stored in the tank body 81 is decreased. Therefore, water stored in the tank body 81 of the makeup water tank 80 needs to be regularly refilled.

In the makeup water tank 80, a water amount sensor (first measurement sensor) 63 that measures the amount of stored water stored in the tank body 81 is provided. If the amount of water stored in the tank body 81 measured by the water amount sensor 63 becomes less than a lower limit that has been set beforehand, the control device 61 supplies water stored in the fresh water tank 52 to the tank body 81 of the makeup water tank 80 through the fresh water supply line W3 by driving the fresh water pump 53 and opening the fresh water valve 82. In contrast, if the amount of water stored in the tank body 81 measured by the water amount sensor 63 becomes more than an upper limit that has been set beforehand, the control device 61 stops the supply of fresh water to the tank body 81 through the fresh water supply line W3 from the fresh water tank 52 by stopping driving the fresh water pump 53 and closing the fresh water valve 82.

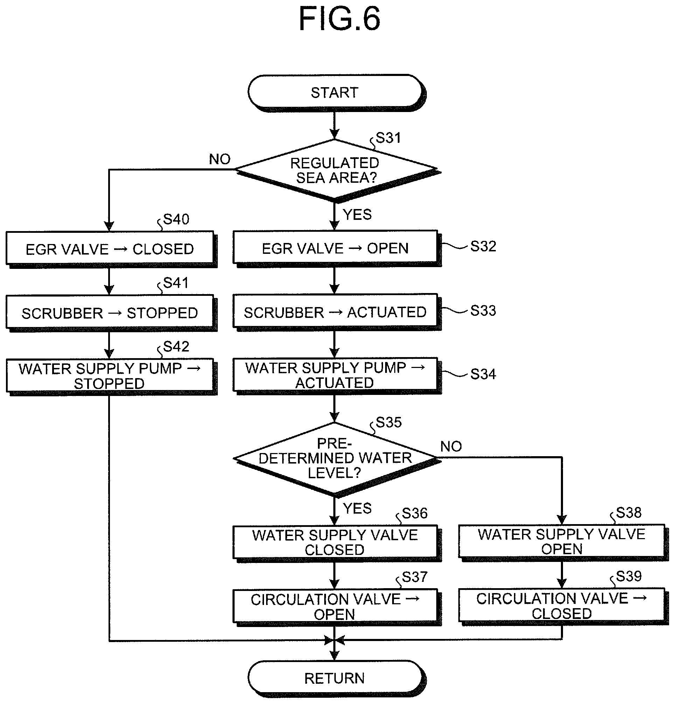

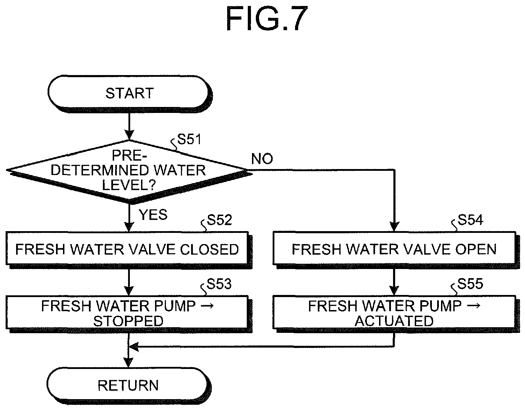

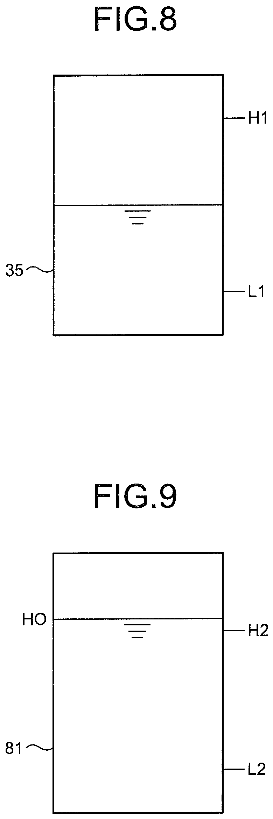

Functions of the exhaust gas treatment apparatus of the third embodiment will now be described. FIG. 6 is flow chart illustrating a flow of a process of water supply control in the water storage unit, FIG. 7 is a flow chart illustrating a flow of a process of water supply control in the makeup water tank, FIG. 8 is a schematic diagram for explanation of water supply control for the water storage unit, and FIG. 9 is a schematic diagram for explanation of water supply control for the makeup water tank.

In the marine diesel engine 11 in the exhaust gas treatment apparatus of the third embodiment, when combustion air is supplied from the scavenging chamber 13 into the cylinder 12, this combustion air is compressed by the piston, and spontaneous ignition and combustion are caused by fuel being injected to this high temperature air. The generated combustion gas is discharged, as exhaust gas, from the exhaust port 14 to the exhaust line G2. The exhaust gas emitted from the marine diesel engine 11 rotates the turbine 23 in the supercharger 21, is thereafter discharged to the exhaust line G3, and all of the exhaust gas is emitted outside from the exhaust line G3 when the EGR valve 31 is closed.

In contrast, when the EGR valve 31 is open, a part of the exhaust gas flows from the exhaust line G3 to the exhaust gas recirculation line G4. Harmful substances, such as NOx and dust, which are contained in the exhaust gas that has flown to the exhaust gas recirculation line G4, are removed by the scrubber 32. That is, by jetting out water from the first water jetting unit 36 when the exhaust gas passes the venturi unit 34, the scrubber 32 cools down the exhaust gas with this water and causes particulate matter (PM), such as SOx and dust, to fall down with the water and be removed therefrom. Further, by jetting out water supplied from the washing water line W4; the second water jetting unit 38 cools down the wall surfaces of the venturi unit 34 and the first water jetting unit 36 with this water, and causes particulate matter (PM), such as SOx and dust, which has adhered to the venturi unit 34, to fall down with the water and be removed therefrom. Furthermore, generation of deposits caused by circulating water is also able to be prevented. Water containing SOx, dust, and the like is stored in the water storage unit 35, and returned again to the water jetting unit 36 through the waste water circulation line W1 by the pump 37.

The exhaust gas, from which the harmful substances have been removed by the scrubber 32, is discharged from the gas exhaust portion 39 to the gas exhaust line G5, small diameter droplet particles therein are separated therefrom by the mist separator 40, and thereafter, the exhaust gas is turned into combustion gas by being mixed with intaken air by the mixer 42. After passing through the combustion air supply line G6 and being compressed by the compressor 22 of the supercharger 21, this combustion gas is cooled down by the air cooler 43 and supplied to the marine diesel engine 11 from the air supply line G1.

By the air cooler 43 cooling down the high temperature combustion gas, steam in the combustion gas is condensed, drain water is generated, and this drain water is discharged to the drain water discharge line W5. This drain water is supplied to the makeup water tank 80 through the drain water discharge line W5 and stored therein.

The control device 61 controls the water supply pump 83, the water supply valve 84, and the circulation valve 85, according to the amount of water stored in the water storage unit 35 in the scrubber 32. The control of the amount of water stored in the scrubber 32 by the control device 61 will now be described in detail by use of a flow chart.

As illustrated in FIG. 5 and FIG. 6, at Step S31, it is determined whether the marine vessel is travelling in a NOx regulated sea area. If it is determined that the marine vessel is travelling in a NOx regulated sea area (Yes); at Step S32, the EGR valve 31 is opened, and at Step S33, the scrubber 32 is actuated. In contrast, if it is determined that the marine vessel is not travelling in a NOx regulated sea area (No); at Step S40, the EGR valve 31 is closed, and at Step S41, the scrubber 32 is stopped.

In this case, the determination of whether the marine vessel is traveling in a NOx regulated sea area is made by a crew member, and since the crew member operates (turns ON) the EGR actuation switch when the marine vessel enters a NOx regulated sea area, the control device 61 opens the EGR valve 31 upon receipt of the EGR actuation signal. In contrast, since the crew member operates (turns OFF) the EGR actuation switch when the marine vessel leaves the NOx regulated sea area, the control device 61 closes the EGR valve 31 in response to stoppage of the EGR actuation signal. The control device 61 may determine a traveling state of the marine vessel in a NOx regulated sea area, and open or close the EGR valve 31.

At Step S31, if it is determined that the marine vessel is traveling in a NOx regulated sea area (Yes); at Step S32, the EGR valve 31 is opened, at Step S33, the scrubber 32 is actuated, and thereafter, at Step S34, the water supply pump 83 is actuated. At Step S35, it is then determined whether the amount of water in the water storage unit 35 in the scrubber 32 measured by the water amount sensor 62 is at a predetermined water level (equal to or more than a lower limit). If it is determined that the amount of water stored in the water storage unit 35 in the scrubber 32 is at the predetermined water level (equal to or more than the lower limit) (Yes); at Step S36, the water supply valve 84 is closed, and at Step S37, the circulation valve 85 is opened. In contrast, if it is determined that the amount of water stored in the water storage unit 35 in the scrubber 32 is not at the predetermined water level (less than the lower limit) (No); at Step S38, the water supply valve 84 is opened, and at Step S39, the circulation valve 85 is closed.

By the water supply valve 84 being opened and the circulation valve 85 being closed when the amount of water stored in the water storage unit 35 in the scrubber 32 is not at the predetermined water level, water stored in the tank body 81 in the makeup water tank 80 is supplied to the water storage unit 35 of the scrubber 32 through the water supply line W8. Accordingly, the amount of water stored in the water storage unit 35 is increased.

Thereafter, if, at Step S35, it is determined that the amount of water stored in the water storage unit 35 is at the predetermined level (Yes); at Step S36, the water supply valve 84 is closed, and at Step S37, the circulation valve 85 is opened. As a result, supply of water to the water storage unit 35 through the water supply line W8 from the makeup water tank 80 is stopped, and water in the makeup water tank 80 circulates through the circulating water line W10. Further, if, at Step S31, it is determined that the marine vessel has left the NOx regulated sea area (No); at Step S40, the EGR valve 31 is closed, at Step S41, the scrubber 32 is stopped, and at Step S42, the water supply pump 83 is stopped.

In the flow chart of FIG. 6, the control of the EGR valve 31, and the control of the water supply valve 84, the water supply pump 83, and the circulation valve 85 have been illustrated together, but practically, they are processed separately. That is, when at Step S31, it is determined that the marine vessel is traveling in a NOx regulated sea area and processing from Step S32 is started, after returning, the processing is returned to Step S35, and processing of Steps S35 to S39 is repeated. When the marine vessel leaves the NOx regulated sea area at Step S31, the processing proceeds to Step S40.

Further, the control device 61 controls the fresh water pump 53 and the fresh water valve 82, according to the amount of water stored in the tank body 81 in the makeup water tank 80. The control of the amount of water stored in the makeup water tank 80 by the control device 61 will now be described in detail by use of a flow chart.

As illustrated in FIG. 5 and FIG. 7, at Step S51, it is determined whether the amount of water in the tank body 81 in the makeup water tank 80 measured by the water amount sensor 63 is at a predetermined water level (equal to or more than a lower limit). If it is determined that the amount of water stored in the tank body 81 in the makeup water tank 80 is at the predetermined level (equal to or more than the lower limit) (Yes); at Step S52, the fresh water valve 82 is closed, and at Step S53, the fresh water pump 53 is stopped. In contrast, if it is determined that the amount of water stored in the tank body 81 in the makeup water tank 80 is not at the predetermined level (less than the lower limit) (No); at Step S54, the fresh water valve 82 is opened, and at Step S55, the fresh water pump 53 is driven.

By the fresh water valve 82 being opened and the fresh water pump 53 being driven in the fresh water supply line W3, fresh water in the fresh water tank 52 is supplied to the tank body 81 in the makeup water tank 80 through the fresh water supply line W3. As a result, the amount of water stored in the tank body 81 is increased. Thereafter, if, at Step S51, the amount of water stored in the tank body 81 is increased and it is determined that the amount of water is at the predetermined level (Yes); at Step S52, the fresh water valve 82 is closed, and at Step S53, the fresh water pump 53 is stopped. Therefore, the supply of fresh water to the tank body 81 through the fresh water supply line W3 from the fresh water tank 52 is stopped.

In the above described water supply control, the upper limits and the lower limits for the amounts of water stored in the water storage unit 35 and the tank body 81 have been set, and when the amounts of water stored in the water storage unit 35 and the tank body 81 measured by the water amount sensors 62 and 63 become more than the upper limits, the control device 61 closes the respective valves 82 and 84, and stops the actuation of the respective pumps 53 and 83, for example.

For example, for the water level in the water storage unit 35, as illustrated in FIG. 8, an upper limit H1 and a lower limit L1 have been set. The initial water level in the water storage unit 35 is between the lower limit L1 and the upper limit H1, and at this time, the water supply valve 84 has been closed, and supply of water from the tank body 81 to the water storage unit 35 has been stopped. When the water level in the water storage unit 35 is decreased to the lower limit L1 by moisture being taken away by recirculating gas; by the water supply valve 84 being opened at a time point, at which the water level becomes less than the lower limit L1, supply of water from the tank body 81 to the water storage unit 35 is started. When the water level in the water storage unit 35 increases, by the water supply valve 84 being closed at a time point, at which the water level reaches the upper limit H1, the supply of water from the tank body 81 to the water storage unit 35 is stopped.

Further, as illustrated in FIG. 9, for the water level in the tank body 81, an upper limit H2 and a lower limit L2 have been set. The initial water level in the tank body 81 is between the lower limit L2 and the upper limit H2, and at this time, the fresh water valve 82 has been closed, the fresh water pump 53 has been stopped, and supply of water from the fresh water tank 52 to the tank body 81 has been stopped. When the water level in the tank body 81 decreases to the lower limit L2 by the amount of water supplied to the water storage unit 35 increasing even though drain water is supplied to the tank body 81; by the fresh water valve 82 being opened and the fresh water pump 53 being driven at a time point, at which the water level becomes less than the lower limit L2, supply of fresh water from the fresh water tank 52 to the tank body 81 is started. When the water level in the tank body 81 increases, by the fresh water valve 82 being closed and the fresh water pump 53 being stopped at a time point, at which the water level reaches the upper limit H2, the supply of fresh water from the fresh water tank 52 to the tank body 81 is stopped.

Further, the upper limit H2 of the water level in the tank body 81 has been set at a value a little lower than an overflow value H0. Therefore, when fresh water is supplied from the fresh water tank 52 to the tank body 81, at a time point, at which the water level in the tank body 81 reaches the upper limit H2 immediately before reaching the overflow value H0, the supply of fresh water is stopped. When the amount of drain water supplied to the tank body 81 becomes more than the amount of water supplied to the water storage unit 35, the water level in the tank body 81 exceeds the lower limit L2. When the water level in the tank body 81 exceeds the overflow value H0, the amount of excessive water is discharged to the overflow line W9. Since this water that has overflowed from the tank body 81 includes oil; normally, this water flows to the drain water treatment line W7, is collected in the drain water tank 73, and the treatment device 75 performs purification treatment of this drain water.

In this third embodiment, the circulation valve 85 provided on the circulating water line W10 and the water supply valve 84 provided on the water supply line W8 are used as a water supply valve that is able to switch over the supply destination of the water stored in the tank body 81 between the circulating water line W10 and the water supply line W8, but limitation is not made to this configuration. For example, a three way valve may be provided as the water supply valve at the portion, at which the circulating water line W10 and the water supply line W8 are connected to each other.

Further, in the third embodiment, for the makeup water tank 80, the circulating water line W10, through which water stored in the tank body 81 is circulated, and the water supply line W8, through which circulating water in the circulating water line W10 is supplied to the scrubber 32, are provided, and supply of water to the scrubber 32 is controlled by the ON/OFF switch-over of the circulation valve 85 and the water supply valve 84, but limitation is not made to this configuration. For example, for the makeup water tank 80, the circulating water line W10 may be disused, and only the water supply line W8, through which water stored in the tank body 81 is supplied to the scrubber 32, may be provided, and supply of water to the scrubber 32 may be controlled by the control of driving of the water supply pump 83 and the control of opening and closing of the water supply valve 84.

Further, the fresh water pump 53 and the fresh water valve 82 are provided on the fresh water supply line W3, through which fresh water in the fresh water tank 52 is supplied to the tank body 81, but limitation is not made to this configuration. For example, a configuration, in which the fresh water tank 52 is arranged at a position higher than the tank body 81, such that a height difference (head difference) is generated between the fresh water tank 52 and the tank body 81, and only the fresh water valve 82 is provided on the fresh water supply line W3, may be adopted.

Further, the configuration, in which the water amount sensor 63 is provided in the tank body 81 as the first measurement sensor that measures the amount of water stored in the tank body 81, has been adopted, but limitation is not made to this configuration. For example, since the amount of water stored in the tank body 81 fluctuates according to the amount of drain water supplied through the drain water discharge line W5 from the air cooler 43, a configuration, in which a flow sensor is provided on the drain water discharge line W5 as the first measurement sensor, may be adopted. Further, since the amount of drain water supplied through the drain water discharge line W5 from the air cooler 43 fluctuates according to the load (output, amount of fuel supplied, air supply rate, and the like) on the marine diesel engine 11; a configuration, in which a load sensor of the engine is provided as the first measurement sensor, may be adopted.

As described above, in the water supply tank of the third embodiment, the exhaust gas recirculation line G4, the scrubber 32, the air cooler 43, and the makeup water tank 80 that stores therein drain water generated by combustion gas being cooled down by the air cooler 43 and that supplies the stored water to the scrubber 32, are provided.

Therefore, a part of the exhaust gas emitted from the marine diesel engine 11 passes through the exhaust gas recirculation line G4, is compressed by the supercharger 21, and is recirculated to the marine diesel engine 11 as combustion gas. By jetting water to the exhaust gas flowing through the exhaust gas recirculation line G4, the scrubber 32 removes harmful substances therefrom. Further, the air cooler 43 cools down the combustion gas compressed by the compressor 22 after the harmful substances have been removed therefrom. When that is done, since drain water is generated by the air cooler 43 cooling down the combustion gas, this drain water is supplied to the scrubber 32 through the water supply line W8. Therefore, in the scrubber 32, water shortage is mitigated by the supply of drain water, and increase in size of the apparatus and increase in cost are able to be prevented by effective utilization of treated water.

In the exhaust gas treatment apparatus of the third embodiment: the circulating water line W10, through which water stored in the tank body 81 is circulated, is provided; the proximal end portion of the water supply line W8 is connected to the circulating water line W10; the distal end portion of the water supply line W8 is connected to the water storage unit 35 of the scrubber 32; the circulation valve 85 of the circulating water line W10 is provided; the water supply valve 84 is provided on the water supply line W8; and when the amount of water stored in the water storage unit 35 becomes less than the lower limit, the control device 61 switches over the supply destination of the water stored in the tank body 81 from the circulating water line W10 to the water supply line W8 by closing the circulation valve 85 and opening the water supply valve 84.

Therefore, when the amount of water stored in the water storage unit 35 is sufficient, by the circulation valve 85 being opened and the water supply valve 84 being closed, the supply destination of the water stored in the tank body 81 is made the circulating water line W10, and when the amount of water stored in the water storage unit 35 decreases, by the circulation valve 85 being closed and the water supply valve 84 being opened, the supply destination of the water stored in the tank body 81 is made the water supply line W8. Accordingly, when the amount of water stored in the water storage unit 35 decreases, water circulating through the circulating water line W10 is able to be immediately supplied to the scrubber 32, and the amount of water stored in the water storage unit 35 is able to be restored early. That is, the water supply pump 83 is needed for the water stored in the tank body 81 to be fed from the water supply line W5 to the water storage unit 35, and a predetermined time period is required for the water supply pump 83 to be brought from the stopped state to a state where the discharge pressure has been increased to a predetermined value. In this embodiment, by this water supply pump 83 being driven and water being circulated through the circulating water line W10 at all times, when the amount of water stored in the water storage unit 35 decreases, circulating water in the circulating water line W10 is able to be supplied from the water supply line W8 to the scrubber 32 early, and delay in the supply of water is able to be solved.

In the exhaust gas treatment apparatus of the third embodiment, the proximal end portion of the washing water line W4 is connected to the circulating water line W10 (water supply line W8). Therefore, the tank body 81 stores therein fresh water and drain water, and the second water jetting unit receives and jets out the circulating water in the circulating water line W10 from the washing water line W4. Accordingly, by use of the fresh water or drain water as water to be jetted to the exhaust gas, the venturi unit 34 is able to be washed adequately with the water jetted out by the second water jetting unit.

In the exhaust gas treatment apparatus of the third embodiment, the orifice 86 is provided on the circulating water line W10 downstream from the portion, at which the circulating water line W10 is connected to the water supply line W8, and the washing water line W4, through which water is supplied to the second jetting unit 38 of the scrubber 32, is provided to branch from the circulating water line W10 upstream of the portion, at which the circulating water line W10 is connected to the water supply line W8.

Therefore, when the amount of water stored in the water storage unit 35 is sufficient, the water stored in the tank body 81 circulates through the circulating water line W10 without being supplied to the scrubber 32, and a part of that water is supplied to the second jetting unit 38 through the washing water line W4; and thereby the venturi unit 34 is able to be washed with this water. As this happens, by the provision of the orifice 86 on the circulating water line W10, this orifice 86 serves as flow channel resistance (pressure loss), an amount of water corresponding thereto is able to be made to flow to the washing water line W4, and an adequate amount of water is able to be made to flow to the washing water line W4. When the amount of water stored in the water storage unit 35 becomes less than the lower limit, the water stored in the tank body 81 is supplied through the water supply line W8 to the water storage unit 35 of the scrubber 32; and by the pressure loss in the water supply line W8 being set to be the same as the resistance of the orifice 86 (pressure loss), an adequate amount of water is able to be made to flow to the washing water line W4 upon this supply also.

The configuration of the scrubber 32 described in each of the above described embodiments is just an example, and any other configuration may be adopted. For example, the scrubber 32 has been described to remove SOx and dust, the harmful substances, but is not limited to this configuration. For example, a configuration, in which: the scrubber is formed of a first scrubber that removes harmful substances, such as SOx and dust, and a second scrubber that removes harmful substances, such as dust; and a water storage unit is connected to a water storage unit of each scrubber via a waste water line, may be adopted.

Further, in each of the above described embodiments, a main engine is used as the marine diesel engine, but the embodiments may be applied to a diesel engine used as a generator.

### Reference Signs List

11 MARINE DIESEL ENGINE
21 SUPERCHARGER
31 EGR VALVE
32 SCRUBBER
34 VENTURI UNIT
35 WATER STORAGE UNIT
36 FIRST WATER JETTING UNIT
38 SECOND WATER JETTING UNIT
43 AIR COOLER (COOLER)
51 WATER GENERATOR
52 FRESH WATER TANK
53 FRESH WATER PUMP
54 FLOW REGULATING VALVE
55 FLOWMETER
61 CONTROL DEVICE
62 WATER AMOUNT SENSOR (SECOND MEASUREMENT SENSOR)
63 WATER AMOUNT SENSOR (FIRST MEASUREMENT SENSOR)
71 DRAIN WATER PUMP
80 MAKEUP WATER TANK (WATER SUPPLY TANK)
81 TANK BODY
82 FRESH WATER VALVE
83 WATER SUPPLY PUMP
84 WATER SUPPLY VALVE
85 CIRCULATION VALVE
86 ORIFICE (NARROWED PORTION)
G4 EXHAUST GAS RECIRCULATION LINE
W3 FRESH WATER SUPPLY LINE
W4 WASHING WATER LINE (FIRST WASHING WATER LINE, SECOND WASHING WATER LINE, THIRD WASHING WATER LINE)
W5 DRAIN WATER DISCHARGE LINE (DRAIN WATER SUPPLY PIPE)
W6 DRAIN WATER SUPPLY LINE
W7 DRAIN WATER TREATMENT LINE
W8 WATER SUPPLY LINE
W9 OVERFLOW LINE
W10 CIRCULATING WATER LINE

## Claims

1. A scrubber, comprising:
a venturi unit, into which exhaust gas is introduced;
a first water jetting unit that removes, by jetting water to the exhaust gas that has been introduced into the venturi unit, a harmful substance contained therein; and
a second water jetting unit that removes, by jetting water to a wall surface of the venturi unit, the harmful substance that has adhered thereto.

2. An exhaust gas treatment apparatus, comprising:
an exhaust gas recirculation line, through which a part of exhaust gas emitted from an engine is recirculated to the engine as a part of combustion gas; and
the scrubber according to claim 1 and provided on the exhaust gas recirculation line.

3. The exhaust gas treatment apparatus according to claim 2, wherein a fresh water supplying device that supplies fresh water to the scrubber, and a first washing water line, through which the fresh water from the fresh water supplying device is supplied to the second water jetting unit, are provided.

4. The exhaust gas treatment apparatus according to claim 2 or claim 3, wherein a cooler that is provided on the exhaust gas recirculation line and cools down combustion gas resulting from mixture of air and recirculating gas, a condensed water supplying device that supplies, to the scrubber, condensed water generated by the cooler cooling down the combustion gas, and a second washing water line, through which the condensed water from the condensed water supplying device is supplied to the second water jetting unit, are provided.

5. The exhaust gas treatment apparatus according to claim 2, wherein a water supply tank that stores therein a fresh water, and stores condensed water generated by a cooler cooling down the combustion gas is provided, the cooler being provided on the exhaust gas recirculation line, and a third washing water line, through which water in the water supply tank is supplied to the second water jetting unit, is provided.

6. The exhaust gas treatment apparatus according to claim 5, wherein a water supply line, through which the water in the water supply tank is supplied to a water storage unit of the scrubber, is provided, and the washing water line supplies the water in the water supply line to the second water jetting unit.

7. The exhaust gas treatment apparatus according to claim 6, wherein a circulating water line, through which water stored in the water supply tank is circulated, is provided, and the water supply line supplies the water in the circulating water line to the water storage unit of the scrubber.

8. The exhaust gas treatment apparatus according to claim 7, wherein a narrowed portion is provided on the circulating water line downstream from a portion where the circulating water line is connected to the water supply line, and the washing water line is connected to the circulating water line upstream of the portion where the circulating water line is connected to the water supply line.

9. The exhaust gas treatment apparatus according to any one of claim 6 to claim 8, wherein a water supply valve provided on the water supply line, a measurement sensor that measures amount of water stored in the water storage unit, and a control device that opens the water supply valve when the amount of water stored in the water storage unit measured by the measurement sensor becomes less than a preset lower limit, are provided.

10. The exhaust gas treatment apparatus according to any one of claim 2 to claim 9, wherein an EGR valve is provided on the exhaust gas recirculation line, and when the EGR valve is opened, water is supplied to the second water jetting unit.

11. A marine vessel comprising the exhaust gas treatment apparatus according to any one of claim 2 to claim 10.

## Amended claims

### Amended claims under Art. 19.1 PCT

**1.** A scrubber, comprising:
a venturi unit, into which exhaust gas is introduced;
a first water jetting unit that removes, by jetting circulating water to the exhaust gas that has been introduced into the venturi unit, a harmful substance contained therein, the circulating water circulating after the harmful substance having been removed; and
a second water jetting unit that removes, by jetting fresh water to a wall surface of the venturi unit, the harmful substance that has adhered thereto.

**2.** An exhaust gas treatment apparatus, comprising:
an exhaust gas recirculation line, through which a part of exhaust gas emitted from an engine is recirculated to the engine as a part of combustion gas; and
the scrubber according to claim 1 and provided in the exhaust gas recirculation line.

**3.** The exhaust gas treatment apparatus according to claim 2, wherein a fresh water supplying device that supplies fresh water to the scrubber, and a first washing water line, through which the fresh water from the fresh water supplying device is supplied to the second water jetting unit, are provided.

**4.** The exhaust gas treatment apparatus according to claim 2 or claim 3, wherein a cooler that is provided in the exhaust gas recirculation line and cools down combustion gas resulting from mixture of air and recirculating gas, a condensed water supplying device that supplies, to the scrubber, condensed water generated by the cooler cooling down the combustion gas, and a second washing water line, through which the condensed water from the condensed water supplying device is supplied to the second water jetting unit, are provided.

**5.** The exhaust gas treatment apparatus according to claim 2, wherein a water supply tank that stores therein a fresh water, and stores condensed water generated by a cooler cooling down the combustion gas is provided, the cooler being provided in the exhaust gas recirculation line, and a third washing water line, through which water in the water supply tank is supplied to the second water jetting unit, is provided.

**6.** The exhaust gas treatment apparatus according to claim 5, wherein a water supply line, through which the water in the water supply tank is supplied to a water storage unit of the scrubber, is provided, and the washing water line supplies the water in the water supply line to the second water jetting unit.

**7.** The exhaust gas treatment apparatus according to claim 6, wherein a circulating water line, through which water stored in the water supply tank is circulated, is provided, and the water supply line supplies the water in the circulating water line to the water storage unit of the scrubber.

**8.** The exhaust gas treatment apparatus according to claim 7, wherein a narrowed portion is provided in the circulating water line downstream from a portion where the circulating water line is connected to the water supply line, and the washing water line is connected to the circulating water line upstream of the portion where the circulating water line is connected to the water supply line.

**9.** The exhaust gas treatment apparatus according to any one of claim 6 to claim 8, wherein a water supply valve provided in the water supply line, a measurement sensor that measures amount of water stored in the water storage unit, and a control device that opens the water supply valve when the amount of water stored in the water storage unit measured by the measurement sensor becomes less than a preset lower limit, are provided.

**10.** The exhaust gas treatment apparatus according to any one of claim 2 to claim 9, wherein an EGR valve is provided in the exhaust gas recirculation line, and when the EGR valve is opened, water is supplied to the second water jetting unit.

**11.** A marine vessel comprising the exhaust gas treatment apparatus according to any one of claim 2 to claim 10.

Statement under Art. 19.1 PCT
Claim 1 has been amended to specify configurations of a first water jetting unit and a second water jetting unit. A support for the amendment is described in paragraphs [0042] and [0050] of the specification.
